**Europäisches Patentamt**

**European Patent Office**

**Office européen des brevets**

(19)

(11) Veröffentlichungsnummer : **0 053 148**
**B1**

(12) **EUROPÄISCHE PATENTSCHRIFT**

(45) Veröffentlichungstag der Patentschrift :
**19.12.84**

(51) Int. Cl.³ : **D 21 H   5/10, B 41 M   3/14,**
**G 06 K   19/00, G 07 D   7/00**

(21) Anmeldenummer : **81901527.2**

(22) Anmeldetag : **29.05.81**

(86) Internationale Anmeldenummer :
**PCT/DE 81/00080**

(87) Internationale Veröffentlichungsnummer :
**WO/8103509 (10.12.81 Gazette 81/29)**

(54) **WERTPAPIER MIT ECHTHEITSMERKMALEN IN FORM VON LUMINESZIERENDEN SUBSTANZEN UND VERFAHREN ZUR ECHTHEITSBESTIMMUNG.**

(30) Priorität : **30.05.80 DE 3020601**

(43) Veröffentlichungstag der Anmeldung :
**09.06.82 Patentblatt 82/23**

(45) Bekanntmachung des Hinweises auf die Patenterteilung : **19.12.84 Patentblatt 84/51**

(84) Benannte Vertragsstaaten :
**FR LU NL**

(56) Entgegenhaltungen :
**DE-A- 2 037 755**
**DE-A- 2 318 716**
**DE-B- 1 449 107**
**US-A- 2 704 634**

(73) Patentinhaber : **GAO GESELLSCHAFT FÜR AUTOMA-
TION UND ORGANISATION MBH**
**Euckenstrasse 12**
**D-8000 München 70 (DE)**

(72) Erfinder : **KAULE, Wittich**
**Germeringer Strasse 50**
**D-8035 Gauting (DE)**
Erfinder : **SCHWENK, Gerhard**
**Edelweissstrasse 20**
**D-8031 Puchheim (DE)**
Erfinder : **STENZEL, Gerhard**
**Schlessstättstrasse 6**
**D-8000 München 2 (DE)**

(74) Vertreter : **Kador . Klunker . Schmitt-Nilson . Hirsch**
**Cornellusstrasse 15**
**D-8000 München 5 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Wertpapier mit in einem schmalen Wellenlängenbereich von maximal etwa 100 nm lumineszierenden Echtheitsmerkmalen.

Unter der Bezeichnung « Wertpapier » werden hier Banknoten, Scheckformulare, Aktien und Briefmarken sowie Ausweise, Kreditkarten, Scheckkarten, Pässe, Flugscheine und andere Urkunden und Dokumente verstanden.

Die Absicherungen von Wertpapieren gegen Fälschung mittels lumineszierender Substanzen ist schon seit langem bekannt. Bereits in der DE-C-449 133 aus dem Jahre 1925 und der DE-C-497 037 aus dem Jahre 1926 wird das Einbringen von lumineszierenden Substanzen in Wertpapiere beschrieben, wobei die Luminophore mit ultravioletten oder anderen unsichtbaren Strahlen anregbar sind und im sichtbaren Bereich emittieren.

In den US-A-3 473 027 und 3 525 698 sind Luminophore und deren Verwendung als Codierfarben auf der Basis von mit Seltenerdmetallen dotierten Wirtsgittern, die gegebenenfalls coaktiviertsind, beschrieben, bei denen die Anregung im UV-Bereich und kurzwelligen sichtbaren Bereich und die Emission im sichtbaren oder IR-Bereich erfolgen, wobei die Emissionen im IR-Bereich zur Erweiterung des verwendbaren Spektralbereiches herangezogen werden.

Die in der DE-A-25 47 768 beschriebenen Seltenerdluminophore werden im IR-Bereich angeregt und emittieren im sichtbaren Bereich.

Die Verwendung von Luminophoren zur Absicherung von Wertpapieren wird ferner in der DE-A-15 99 011 beschrieben.

Der Stand der Technik bezüglich der Absicherung von Wertpapieren mit lumineszierenden Substanzen läßt sich dahingehend zusammenfassen, daß solche Luminophore ausgewählt wurden, deren Emission in verhältnismäßig großem spektralen Abstand von der Anregung erfolgt, um sicherzustellen, daß die Emissionscharakteristiken ohne den störenden Einfluß des Anregungslichtes bestimmt werden können.

In der Patentliteratur werden ferner zahlreiche Vorschläge für die Modifizierung von Luminophoren, beispielsweise durch Kombination derselben mit anderen Substanzen oder deren Beschichtung und Umhüllung, für die verschiedensten Zwecke einschließlich der Änderung der Spektralbereiche gemacht.

So wird beispielsweise vorgeschlagen, die chemische Beständigkeit von Luminophoren durch Ummantelung mit bestimmten Substanzen zu verbessern. Bei Leuchtschirmen wird zur mehrfarbigen Darstellung von Bildern ein Teil der Leuchtstoffe mit einer Sperrschicht ummantelt. Bei der Herstellung von Kathodenstrahlröhren für Farbfernsehempfänger ist es bekannt, die Leuchtstoffe mit Pigmenten zu beschichten um den Kontrast zu erhöhen.

Zur Verbesserung des Bildes von Bildschirmröhren für Farbfernsehempfänger ist es ferner bekannt, unerwünschte Emissionen der Leuchtstoffe durch Pigmentummantelung zu unterdrücken. Diesbezüglich kann beispielsweise auf die DE-A-27 54 369 und die US-A-4 152 483 hingewiesen werden.

Es ist auch bekannt, beispielsweise aus der GB-A-1 484 471, den Anregungsbereich eines Luminophors durch Kombination mit einem zweiten Luminophor zu erweitern.

In der DE-A-21 02 120 ist ferner die Ummantelung von Luminophoren mit dielektrischen Vielfachbeschichtungen beschrieben, um einen Teil des Emissionsspektrums zu unterdrücken und auf diese Weise die Intensität bei anderen Wellenlängen zu erhöhen.

In der DE-A-15 99 011 wurde bereits vorgeschlagen, Luminophore, die zur Absicherung von Identifizierungskarten und dergleichen verwendet werden, mit einer Folie abzudecken, um auf diese Weise zu vermeiden, daß die Absicherung mit bloßem Auge erkannt werden kann.

In der US-A-2 704 634 ist ein Prüfverfahren für handelsübliche Bankschecks und dergl. beschrieben. Außerdem ist in dieser Druckschrift ein Gerät zur Durchführung des Verfahrens beschrieben. Das bekannte Gerät eignet sich zwar für die Messung allgemein für die Messung fluoreszierender und phosphoreszierender Stoffe, bezüglich der Messung quasiresonanter Stoffe enthält die Druckschrift jedoch keine Hinweise.

Schließlich ist es aus der GB-A-1 186 253 bekannt, Aufzeichnungen mit lumineszierenden Substanzen teilweise mit für die Emissionsstrahlung undurchlässigen Farbstoffen zu maskieren, um damit bestimmte Zeichen, wie Buchstaben, darstellen zu können.

Bei der Absicherung von Wertpapieren mit Echtheitsmerkmalen in Form von lumineszierenden Substanzen haben die zahlreichen für verschiedene Zwecke vorgeschlagenen Modifikationen der Luminophore keine Anwendung gefunden. Wie vorstehend ausgeführt wurde, lag das Bestreben bei Echtheitsmerkmalen für Wertpapiere vielmehr in der Auswahl geeigneter Luminophore, deren Anregung und Emission eine große spektrale Verschiebung haben, um die Identifizierung ohne Störung durch das Anregungslicht möglichst einfach und sicher zu gestalten.

Ein wesentlicher Nachteil der bei Wertpapieren eingesetzten Luminophoren liegt somit darin, daß die Lumineszenz mit handelsüblichen Vorrichtungen festgestellt werden kann und aus den Lumineszenzcharakteristiken auf das Vorliegen bestimmter Luminophore geschlossen werden kann. Es wäre jedoch vorteilhafter, wenn mit üblichen Mitteln die Lumineszenz überhaupt nicht feststellbar wäre.

Der Erfindung liegt die Aufgabe zugrunde, ein Wertpapier mit Echtheitsmerkmalen in Form von lumineszierenden Substanzen zu schaffen, bei dem die Lumineszenz mit üblichen Mitteln nicht beobachtbar ist.

Der Erfindung liegt die Erkenntnis zugrunde, daß diese Aufgabe dadurch gelöst werden kann, daß das Wertpapier mit solchen Luminophoren ausgestattet wird, die eine Emission nur spektral nahe dem Anregungsbereich zeigen, so daß die Emission im Anregungslicht untergeht.

Diese Aufgabe wird bei einem Wertpapier der eingangs genannten Art dadurch gelöst, daß mindestens ein Teil der lumineszierenden Merkmale ausschließlich in diesem schmalen Wellenlängenbereich anregbar ist und in diesem gleichen Wellenlängenbereich auch emittiert.

Gegenstand der Erfindung ist ferner ein Verfahren zur Echtheitsbestimmung von lumineszierenden Substanzen enthaltenden Wertpapieren gemäß der Erfindung durch Anregung mit elektromagnetischer Strahlung und Beobachtung der Anregungs- und/oder Emissionscharakteristiken, das dadurch gekennzeichnet ist, daß die Anregung der lumineszierenden Substanzen spektral in der Nähe der Emission erfolgt, die ausgewertet wird.

Bei den bei den erfindungsgemäßen Wertpapieren verwendeten lumineszierenden Substanzen wird somit ein Effekt ausgenutzt, welcher der Resonanzfluoreszenz von Gasen sehr ähnelt und deshalb im folgenden mit Quasiresonanzlumineszenz bezeichnet wird.

Resonanzfluoreszenz ist die bei der Lumineszenz von Gasen bekannte Erscheinung, daß Anregung und Emission an der gleichen Stelle im Spektrum erfolgen ; sie tritt nur bei Gasen unter niedrigem Druck auf, da bei diesen die Moleküle relativ wenig wechselwirken. Die bei der Anregung aufgenommene Energie hat aufgrund fehlender Wechselwirkung mit der Umgebung keine Möglichkeit, teilweise in andere Prozesse abzufließen. Die Emission erfolgt daher mit derselben Quantenenergie, d. h. Wellenlänge bzw. Frequenz, wie die Anregung.

Auch Seltenerdmetalle, die in Wirtsgitter « verdünnt » eingebaut sind, zeigen einen ähnlichen Effekt. Da die optisch wirksamen inneren Schalen im Atombau von Seltenerdmetallen durch äußere Schalen abgeschirmt werden und wegen des verdünnten Einbaus in das Wirtsgitter ist die Wechselwirkung mit der Umgebung verhältnismäßig gering. Daraus resultieren die sehr schmalbandigen Anregungs- und Emissionslinien der Seltenerdmetall-Luminophore.

Die Quasiresonanzlumineszenz von Seltenerdmetall-Luminophoren ist durch Forschungsarbeiten für Laserstoffe bekannt. Beispielsweise kann auf die US-A-3 208 009 hingewiesen werden, in der ein mit dreiwertigem Ytterbium aktivierter Festkörperlaser beschrieben ist, der bei 914 bis 974 μm angeregt wird und bei 1 015 μm emittiert.

Bei der Absicherung von Wertpapieren mit Seltenerdmetall-Luminophoren wurden bisher vorzugsweise solche Luminophore eingesetzt, bei denen das Grundgitter und die Dotierung so gewählt wurden, daß in bestimmten Wellenlängenbereichen, beispielsweise im UV- oder IR-Bereich, angeregt wird, die Anregungsenergie mittels « Energietransfer » auf das Seltenerdmetall-Ion übertragen wird und dieses die Energie spektral von der Anregung weit getrennt emittiert.

Demgegenüber erfolgt gemäß der Erfindung die Emission im gleichen schmalen Wellenlängenbereich wie die Anregung, bzw. in spektral eng benachbarten Wellenlängen. Ein « Energietransfer » wird vermieden. Spektral getrennt liegende Emissionen werden, falls sie zusätzlich auftreten, durch besondere Maskierungsverfahren unterdrückt.

Um den erfindungsgemäßen Effekt zu erzielen darf der Wellenlängenbereich zum Beispiel durch handelsübliche Farbstofffilter oder Farbgläser nicht auflösbar sein. In der Regel ist diese Bedingung erfüllt, wenn der Bereich eine Breite von etwa 100 nm vorzugsweise etwa 50 nm und weniger aufweist.

Geeignete Luminophore, die auch ohne zusätzliche Maßnahmen nur eine Quasiresonanzlumineszenz zeigen, können durch geschickte Wahl von geeigneten Grundgittern und aktiven Dotierungen bereitgestellt werden.

Gemäß der Erfindung ist man jedoch nicht auf die Auswahl von Luminophoren beschränkt, die von Hause aus nur Quasiresonanz-Lumineszenz zeigen, denn es können erfindungsgemäß auch solche Luminophore eingesetzt werden, die zusätzlich zur Quasiresonanzlumineszenz eine oder mehrere übliche Lumineszenzemissionen zeigen, wenn dafür Sorge getragen wird, daß diese nicht erwünschten Emissionen unterdrückt werden.

Das Unterdrücken von nicht erwünschten Emissionen kann durch Verwendung von Maskierungssubstanzen erfolgen, die in jenen Wellenlängenbereichen absorbieren, bei denen der Luminophor eine unerwünschte Emission aufweist oder eine unerwünschte Anregung gestattet.

Als Maskierungssubstanzen eignen sich insbesondere Farbstoffe und Farbpigmente. Vorzugsweise werden die Luminophore mit den Maskierungssubstanzen ummantelt. Man kann die Merkmalstoffe aber auch durch Mischen von Lumineszenzstoff und Maskierungssubstanz herstellen. Eine weitere Möglichkeit ist das Aufbringen des Merkmalstoffes in oder auf dem Wertpapier und nachfolgende Beschichtung mit der Maskierungssubstanz ; noch eine weitere Möglichkeit ist das Einbringen von lumineszierenden Dotierungen in Wirtssubstanzen, welche aufgrund ihrer optischen Eigenschaften gleichzeitig die Maskierungsfunktion übernehmen können.

Die bisher bekanntgewordenen Absicherungen von Wertpapieren mit Luminophoren sind entweder unter normaler Beleuchtung, UV-Beleuchtung oder IR-Beleuchtung sichtbar oder mit handelsüblichen Geräten sichtbar zu machen, solange es möglich ist, das Anregungslicht und die Emission voneinander zu trennen.

Da für die Eigenschaft « Quasiresonanz » keine technische Anwendung bekannt ist, sind auch keine dafür geeigneten Nachweisgeräte im Handel erhältlich. Wegen der fehlenden technischen Anwendung sind die entsprechenden Luminophore ebenfalls nicht handelsüblich. Dies stellt einen wichtigen zusätzlichen Sicherheitsfaktor dar.

Die Möglichkeit von Fälschungen wird dadurch zusätzlich erschwert.

Beim Einbringen von üblichen Luminophoren in Wertpapiere muß darauf geachtet werden, daß sowohl der Anregungsbereich als auch der Emissionsbereich nicht durch andere Zusätze gestört werden. Bei den erfindungsgemäß eingesetzten Luminophoren braucht hingegen nur ein schmaler Wellenlängenbereich freigehalten werden, in dem sowohl die Anregung als auch die Emission erfolgt. Dies ist insbesondere bei Verwendung des Luminophors als Farbzusatz vorteilhaft.

Die bei den erfindungsgemäßen Wertpapieren eingesetzten Seltenerdmetall-Luminophore sind im allgemeinen lösungsmittelecht und entsprechen allen für Banknotenfarben vorgeschriebenen Beständigkeitsprüfungen. Bei weniger hohen Ansprüchen an die Beständigkeit können aber natürlich auch andere Stoffe, die nicht alle diese bei der Banknotenherstellung üblichen Anforderungen erfüllen, verwendet werden.

Beim Nachweis der Lumineszenz sind keine Filter erforderlich, die Anregungslicht und Emission spektral voneinander trennen, d. h. die Nachweisapparatur braucht keine derartigen Teile zu enthalten, aus denen man schließen könnte, welche Substanz nachgewiesen wird.

Zur Herstellung von sicherheitstechnisch besonders wertvollen Merkmalstoffen ist die Nachleuchtdauer der Luminophore vorzugsweise so kurz zu wählen, daß infolge der Blindzeit und Erholungszeit von Auge bzw. photoelektrischer Nachweisanordnung die Emission nach Beendigung der Anregung nicht ohne besondere Maßnahmen zu beobachten ist. Eine weitere Steigerung der Sicherheit kann erreicht werden, wenn die Quasiresonanzemission in unsichtbare Spektralbereiche verlegt wird.

Wegen des unüblichen Nachweisverfahrens und der Schwierigkeit für Außenstehende den Spektralbereich zu erkennen ist die Wahrscheinlichkeit der Entdeckung des Sicherheitsmerkmals sehr gering. Für weniger stark gefährdete Anwendungen kann es gegebenenfalls zur Vereinfachung der Prüfvorrichtung deshalb schon ausreichen, Luminophore mit etwas längerer Nachleuchtdauer und eventuell etwas höherer Lumineszenzintensität zu verwenden.

Die Erfindung wird nachstehend anhand von Beispielen näher erläutert.

Beispiel 1

86 g Yttriumoxid $Y_2O_3$, 7 g Europiumoxid $Eu_2O_3$, 40 g Natriumkarbonat $Na_2CO_3$, 40 g Schwefel S und 20 g Kaliumphosphat $K_3PO_4$ wurden innig vermischt und in einem Korundtiegel an Luft bei 1 100 °C vier Stunden lang geglüht.

Nach dem Abkühlen wurde das Sinterprodukt vermahlen, das entstandene überschüssige Natriumpolysulfid mit Wasser herausgelöst, der Rückstand aus Europium-dotierten Yttriumoxisulfid in einer Rührwerkskugelmühle mikronisiert und bei 500 °C rekristallisiert.

Es wurde als farbloses Pulver Europium-aktiviertes-Yttriumoxisulfid mit der Zusammensetzung $Y_{1,9}Eu_{0,1}O_2S$ und einer mittleren Korngröße von 0,5 μm erhalten.

Das Produkt zeigte unter UV-Bestrahlung eine rote Lumineszenz bei 630 nm. Diese Liniengruppe ist jedoch nicht nur mit UV-Licht, sondern auch in Quasiresonanz anregbar.

Um die UV-Anregbarkeit zu beseitigen, wurde das Pulver zusammen mit einem UV-absorbierenden Farbstoff, der im Bereich der roten Lumineszenz jedoch durchlässig ist, in ein Kunstharz eingebettet.

Zu diesem Zweck wurden in einem beheizbaren Kneter mit 0,6 l Nutzinhalt 200 g des Produktes mit 34 g Isophorondiisocyanat, 17 g Toluolsulfonamid, 10 g Melamin und 10 g Permanentgelb GR 36 L (eingetr. Warenzeichen der Fa. Hoechst) gemischt. Die Temperatur wurde langsam auf 140 °C gesteigert, wobei eine homogene Masse entstand, die nach 10 Minuten unter exothermer Reaktion bei einer Temperatursteigerung auf 200 °C zu einem spröden Festkörper polymerisierte.

Das Produkt wurde noch weitere 20 Minuten bei 180 °C gehalten und anschließend nach dem Abkühlen in einer Stiftmühle zu einem feinen gelben Pulver vermahlen.

Das so gewonnene Pigment zeigte bei Anregung mit UV-Licht keine Lumineszenz, war jedoch bei 630 nm in Quasiresonanz anregbar.

Das Pigment eignet sich zum Zumischen in Druckfarben, wobei die Quasiresonanz-Lumineszenz nicht beeinträchtigt wird, wenn ein im Resonanzbereich durchlässiger Farbstoff, z. B. Hansagelb, Helioorange, Permanentrot oder Hostapermviolett verwendet wird (eingetragenes Warenzeichen der Fa. Hoechst).

Beispiel 2

100 g Europium-aktiviertes Yttriumoxisulfid $Y_{1,9}Eu_{0,1}O_2S$, hergestellt gemäß Beispiel 1, wurden statt mit den genannten Farbstoffen mit 10 g 2,4-Dihydroxybenzophenon gemischt.

Bei Anregung mit UV-Licht zeigte dieses Gemisch keine Lumineszenz, es hatte jedoch eine in Quasiresonanz anregbare rote Lumineszenz bei 630 nm.

Dieses Gemisch ist vollkommen farblos und eignet sich daher für farblose Aufdrucke auf Wertpapieren.

Beispiel 3

293 g Lanthanoxid $La_2O_3$ und 39,4 g Ytterbiumoxid $Y_2O_3$ wurden in konzentrierter Salpetersäure heiß gelöst und mit Oxalsäure als Oxalate gefällt.

Das getrocknete Mischoxalat wurde in einen Tiegel aus hochreinem Aluminiumoxid $Al_2O_3$

überführt und 24 Stunden bei 1 300 °C geglüht.

Das Produkt, Ytterbium-aktiviertes Lanthanoxid, hatte die Zusammensetzung $(La_{0,9}Yb_{0,1})_2O_3$ und war reinweiß gefärbt. Nach dem Vermahlen auf einer Strahlmühle wurde das Produkt mit einer mittleren Korngröße von 1 μm erhalten.

Der Luminophor zeigte eine in Quasiresonanz anregbare Lumineszenz bei 950 nm. Im UV-Bereich zeigte er ferner eine schwache Anregungsmöglichkeit.

Zu deren Beseitigung wurden nun 200 g des Luminophors mit 10 g m-Hydroxyphenylbenzoat $C_{13}H_9O_3$ gemischt.

Die Mischung zeigte keine Lumineszenz bei Anregung mit UV-Licht, jedoch eine in Quasiresonanz anregbare Lumineszenz bei 950 nm.

Da die Quasiresonanz nur im IR ausgenutzt wird und die sichtbaren Bereiche des optischen Spektrums nicht betroffen sind kann der Luminophor mit jedem beliebigen Farbstoff bzw. Farbstoffgemisch kombiniert werden, vorausgesetzt, die Farbstoffe bzw. Farbmischungen sind für den Wellenlängenbereich von 900 nm bis 1 000 nm durchlässig. Farbpigmente mit dieser Eigenschaft gibt es in sämtlichen Farbtönungen, einschließlich farblos und schwarz.

Beispiel 4

94 g Calciumcarbonat $CaCO_3$ und 5,8 g Thuliumoxid $Tm_2O_3$ wurden in Salzsäure HCl gelöst. Mit Natronlauge NaOH wurde auf einen pH-Wert von 10 eingestellt und mit einer wässrigen Natriumwolframatlösung gefällt.

Das erhaltene Mischwolframat wurde mit 120 g Natriumwolframat $Na_2WO_4$ abgemischt, in einen Tiegel aus Aluminiumoxid überführt und vier Stunden bei 1 100 °C geglüht.

Nach dem Abkühlen wurde das Flußmittel mit Wasser herausgewaschen.

Es wurde ein weißes Pulver der Zusammensetzung $Na_{0,03}Ca_{0,94}Tm_{0,03}WO_4$ mit einer mittleren Korngröße von 2 μm erhalten.

Dieses thuliumaktivierte Calciumwolframat weist bei Anregung mit UV-Licht eine blaue Lumineszenz bei 480 nm sowie Lumineszenzen im IR bei 800 und 1 700 nm auf. Die Emission bei 1 700 nm läßt sich auch in Quasiresonanz anregen.

Die Lumineszenzen bei 480 und 800 nm ließen sich durch Kombination mit einer Mischung aus geeignet absorbierenden Farbstoffen und einem IR-Absorber unterdrücken ; eine geeignete derartige Mischung besteht beispielsweise aus dem Ni-Komplex eines Bis-dithio-diketons als IR-Absorber und einem Farbstoffgemisch aus 3 Teilen Chromgelb (eingetragenes Warenzeichen der Fa. Siegle u. Co.), 3 Teilen Litholrubin und 2 Teilen Heliogenblau (eingetragenes Warenzeichen der Fa. BASF).

Da die durch Quasiresonanz anregbare Lumineszenz bei 1 700 nm im mittleren IR-Bereich liegt, lassen sich über das oben gegebene Beispiel hinaus alle organischen Farbstoffe und Pigmente außer Ruß zum Unterdrücken der unerwünschten Emissionen verwenden.

Die Emissionen verschwinden mit Ausnahme der Quasiresonanz auch, wenn nur der Anregungsbereich im UV, beispielsweise mittels 2,4-Dihydroxybenzophenon unterdrückt wird. Das ist insofern vorteilhaft, als damit ein vollkommen farbloser Absicherungsstoff zur Verfügung steht.

Die Wertpapiere gemäß der Erfindung können mit den Luminophoren in vielfältiger Weise ausgestattet werden. Die Luminophore können in die Druckfarben, in das Papier oder in einen Sicherheitsfaden eingebracht werden.

Von besonderer Bedeutung ist dabei, daß die Luminophore mit einer Vielzahl von Farbstoffen und Pigmenten kombiniert werden können, da lediglich ein schmaler Spektralbereich für Anregung und Emission freigehalten werden muß.

Die Luminophore können beispielsweise bei der Herstellung eines Farbstoffes in einem Harz eingelagert werden ; sie können auch mit den Maskierungssubstanzen ummantelt werden und anschließend der Druckfarbe zugegeben werden. Ferner können die Luminophore in Mischung mit der Maskierungssubstanz der Druckfarbe zugesetzt oder mit einer Druckfarbe derart abgeschirmt werden, daß die Unterdrückung der störenden Anregungen bzw. Emissionen von der Druckfarbe selbst übernommen wird. Des weiteren ist es möglich, daß die Merkmalsstoffe in das Papier eingebracht oder auf die Sicherheitsfadenfolie aufgebracht werden. Die Maskierungssubstanz kann gegebenenfalls auch in einem Firnis gelöst vorliegen. Ferner kommt es in Betracht das mit dem Luminophor enthaltender Druckfarbe erhaltene Druckbild mit einer Farbe zu beschichten, die die Maskierungssubstanz enthält ; z. B. durch Überdrucken mit einer entsprechenden Druckfarbe.

Die besondere Schwierigkeit beim Nachweisen der Quasiresonanz besteht darin, daß sich die spektralen Bereiche von Anregungsstrahlung und emittierter Lumineszenzstrahlung überlappen. Eine Trennung durch Filter, wie sonst allgemein üblich, ist somit nicht möglich. Die Nachweismöglichkeiten beschränken sich deshalb im wesentlichen auf die Auswertung der Abklingzeit (die allerdings bei Quasiresonanz besonders schwer zu messen ist) und der geänderten Richtung der Lumineszenzstrahlung im Verhältnis zum Anregungslicht.

Eine für den Nachweis der Abklingzeit geeignete Vorrichtung ist beispielsweise in der DE-A-1 524 711 beschrieben. Bei dieser Vorrichtung wird das zu prüfende Wertpapier im Merkmalsbereich durch eine Blitzlampe geeigneter Strahlung pulsierend beleuchtet. Die emittierte Lumineszenzstrahlung wird spektral zerlegt und die verschiedenen spektralen Strahlungsbereiche werden mittels einer rotierenden Schlitzblende in zeitlicher Reihenfolge abgetastet. Falls Quasiresonanz nicht vorliegt, kann man mit dieser Vorrichtung die unterschiedlichen Abklingzeiten der verschiedenen Lumineszenzen feststellen, weil das gegenüber dem Lumineszenzlicht um viele Zehnerpotenzen intensivere Anregungslicht durch optische Filter von den Detektoren abschirmbar ist.

Im Falle der Quasiresonanz ist diese spektrale Abschirmung nicht möglich; eine Messung mit der in der DE-A-1 524 711 beschriebenen Vorrichtung scheitert deshalb am vom Anregungslicht herrührenden Reststromsignal, welches durch die Ansprech- und Ausräumgeschwindigkeit der photoelektrischen Schicht sowie von der RC-Zeit der Meßelektronik bestimmt ist.

Aus der gleichen Druckschrift ist es auch bekannt, das von einer gepulsten Lichtquelle erzeugte, in seiner Intensität ebenfalls zeitabhängige Lumineszenzsignal in einen Gleich- und einen Wechselstromanteil zu zerlegen, deren Verhältnis ein Maß für die Abklingzeit eines bestimmten Lumineszenzstoffes ist.

Ein Prüfverfahren unter Auswertung der geänderten Richtung der Lumineszenzstrahlung im Verhältnis zum Anregungslicht ist beispielsweise anwendbar, wenn die lumineszierenden Substanzen in einer Schicht des Wertpapiers eingelagert sind, die optisch höher brechend ist als die benachbarten Schichten. Diese Bedingung wird beispielsweise durch eine Glasfaser, eine Kunststoffaser oder eine Kunststoffolie erfüllt. Das Licht, das in die höher brechende Schicht eingeleitet wird, kann bei Einhaltung eines geeigneten Öffnungswinkels die Schicht wegen Totalreflexion nicht verlassen. Wird die höherbrechende Schicht mit den erfindungsgemäßen Lumineszenzsubstanzen ausgestattet, so wird dort Lumineszenzstrahlung angeregt, die wegen ihrer von der Anregung weitgehend unabhängigen Richtungsverteilung Anteile außerhalb des Totalreflexionswinkels hat und damit aus der Schicht austreten kann.

Diese Anteile können von einer im übrigen konventionell aufgebauten Prüfvorrichtung festgestellt werden.

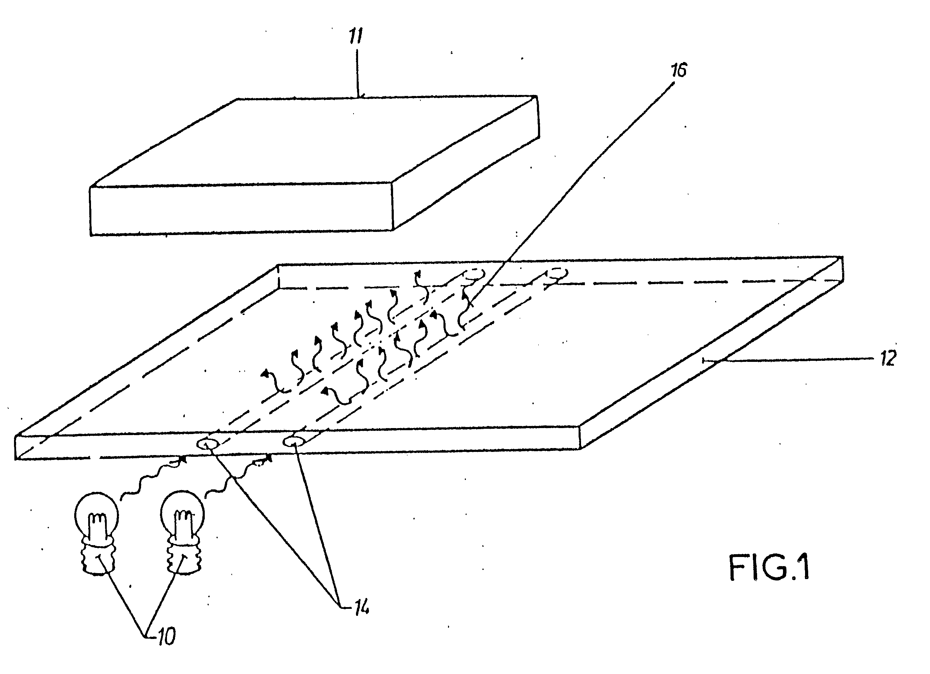

In Fig. 1 ist das Prüfprinzip an einem derartigen Wertpapier gezeigt. Das Anregungslicht wird von den seitlich des Wertpapiers 12 angeordneten Lichtquellen 10 in Richtung der Längsachse der Glasfasern 14 in diese eingeleitet. Die Glasfasern enthalten eine lumineszierende Substanz in geeigneter Konzentration. Die Glasmasse kann auch selbst als eine Art « Wirtsgitter » für lumineszierenden Dotierungsstoffe dienen. Die emittierte Lumineszenzstrahlung ist ungerichtet und tritt zu einem bestimmten Anteil bei Überschreitung des Grenzwinkels der Reflexion aus der Galsfaser aus, wie in der Figur durch Pfeile 16 augedeutet ist. Diese Strahlung kann in einer geeigneten Vorrichtung 11 mittels Photodioden ohne weiteres gemessen werden, wobei die Anregungsstrahlung, welche wegen der Totalreflexion die Glasfaser nicht verlassen kann, unberücksichtigt bleibt.

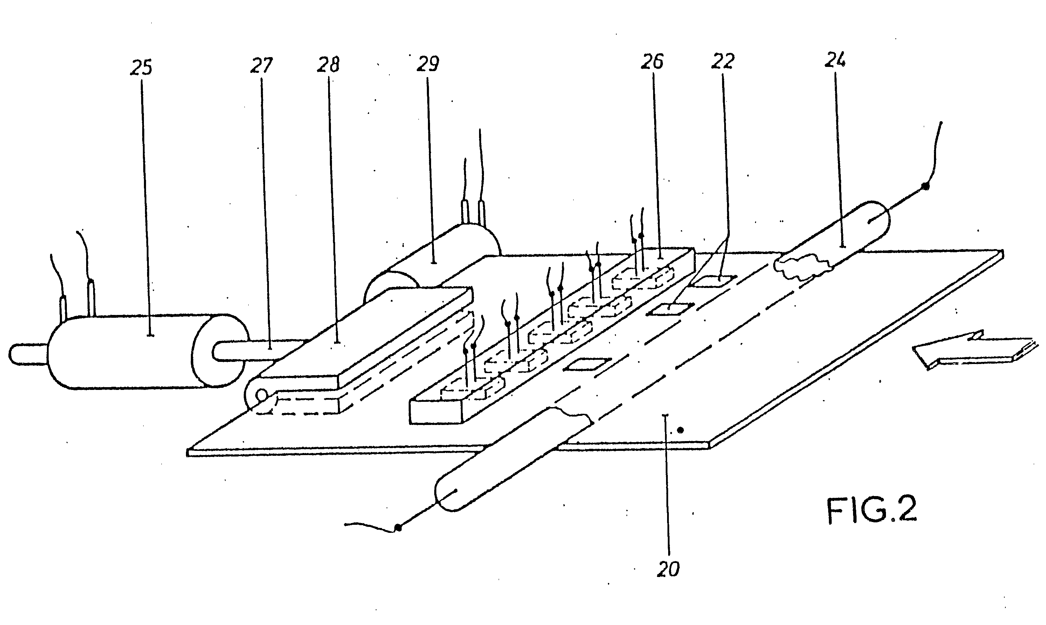

Nachfolgend wird unter Bezugnahme auf Fig. 2 eine besonders geeignete Vorrichtung zur Prüfung eines erfindungsgemäßen, mit aufgedruckten Merkmalstoffen versehenen, Wertpapieres erläutert.

Auf dem Wertpapier 20 ist in Form einzelner Felder eine Codierzeile 22 aufgebracht, die mit einer erfindungsgemäß lumineszierenden Substanz ausgestattet ist.

In der Vorrichtung befinden sich durch einen nicht gezeigten Lichtschutz voneinander getrennt eine Blitzlampe 24 und ein Feld von Photodioden 26, wobei letztere so angeordnet sind, daß sie genau über den Codierfeldern im Merkmalsbereich des Wertpapiers 20 zu liegen kommen können.

Weiterhin befindet sich in der Vorrichtung eine an einem Greifarm angeordnete Klaue 28, mit der eine Kante des Wertpapiers erfaßt werden kann. Die Klaue 28 wird durch einen speziellen Elektromagneten 29 geschlossen. Die Klaue 28 ist selbst an dem Greifarm 27 befestigt, der mittels eines Hubmagneten 25 in Längsrichtung verschoben werden kann.

Beim Einschieben des Wertpapiers 20 durch einen Schlitz in die Prüfvorrichtung wird ein Positionieranschlag, beispielsweise ein Mikroschalter oder eine Lichtschranke, betätigt, welcher den Startimpuls für folgende Vorgänge auslöst. Der Elektromagnet 29 schließt die Klaue 28. Die Blitzlampe 24, die sich genau über der Codierzeile 22 befindet, wird gleichzeitig betätigt. Die Klaue 28 wird mittels des Hubmagneten 25 in Sekundenbruchteilen unter der Blitzlampe 24 weggezogen und so unter das Photodiodenfeld 26 gebracht, daß die Codierzeile des Wertpapiers von den Photodioden erfaßt wird.

Die von den Feldern 22 während der Anregung durch die Blitzlampe emittierte Lumineszenzstrahlung hat eine gewisse Abklingcharakteristik, d. h. die Felder leuchten auch nach Beendigung der Anregung noch eine, allerdings sehr kurze, Zeitspanne nach. Dieses « Nachleuchten » wird von den Photodioden 26 registriert, da die Blitzlampe 24 und die Photodioden 26 durch einen Lichtschutz voneinander getrennt sind. Es ist somit möglich, die Lumineszenz trotz der im gleichen Spektralbereich wie das Anregungslicht liegenden Wellenlänge festzustellen.

Die Blitzlampe 24 kann selbstverständlich auch durch geeignete Leuchtdioden ersetzt werden. Anstelle der Klaue 28 und des Hubmagneten 25 kann auch eine mit definierter konstanter Geschwindigkeit arbeitende Transportvorrichtung, beispielsweise ein Förderband, vorgesehen sein, mit dem das Wertpapier 20 unter der Blitzlampe und dem Photodiodenfeld hindurchbewegt wird. In diesem Fall ist es vorteilhaft, mehrere in Transportrichtung hintereinander angeordnete Photodiodenfelder zu verwenden. Aus dem Verhältnis der von den hintereinander liegenden Photodioden abgegebenen Signale läßt sich über das bloße Vorhandensein einer Lumineszenzstrahlung hinaus auch die Abklingcharakteristik bestimmen.

Die beschriebenen Vorrichtungen bzw. Schaltungen eignen sich natürlich nicht nur zum Nachweis einer Quasiresonanz, bei der die Emission im Spektralbereich der Anregung liegt, sondern auch zum Nachweis jeder anderen Lumineszenz mit charakteristischer Abklingzeit.

## Ansprüche

1. Wertpapier mit in einem schmalen Wellenlängenbereich von maximal etwa 100 nm lumineszierenden Echtheitsmerkmalen, dadurch gekennzeichnet, daß mindestens ein Teil der lumineszierenden Merkmale ausschließlich in diesem schmalen Wellenlängenbereich anregbar ist und in diesem gleichen Wellenlängenbereich auch emittiert.

2. Wertpapier nach Anspruch 1, dadurch gekennzeichnet, daß im Wertpapier zusätzlich zu den Lumineszenzstoffen Maskierungssubstanzen enthalten sind, die zumindest in allen denjenigen Wellenlängenbereichen absorbieren, in denen die Lumineszenzstoffe außerhalb des besagten schmalen Wellenlängenbereiches entweder anregbar sind oder emittieren.

3. Wertpapier nach Anspruch 2, dadurch gekennzeichnet, daß die Maskierungssubstanzen Farbstoffe, Farbpigmente und IR- oder UV-Absorber oder Mischungen davon sind.

4. Wertpapier nach Anspruch 2 oder 3, dadurch gekennzeichnet, daß die Lumineszenzstoffe mit den Maskierungsstoffen vermischt sind.

5. Wertpapier nach Anspruch 2 oder 3, dadurch gekennzeichnet, daß die Lumineszenzstoffe mit den Maskierungssubstanzen ummantelt sind.

6. Wertpapier nach Anspruch 2 oder 3, dadurch gekennzeichnet, daß die Lumineszenzstoffe mit den Maskierungsstoffen überdruckt sind.

7. Wertpapier nach Anspruch 1, dadurch gekennzeichnet, daß die lumineszierenden Echtheitsmerkmale aufgedruckt sind.

8. Wertpapier nach Anspruch 1, dadurch gekennzeichnet, daß die lumineszierenden Echtheitsmerkmale bei der Papierpräparation zugesetzt sind.

9. Wertpapier nach Anspruch 1 oder 3, dadurch gekennzeichnet, daß die lumineszierenden Echtheitsmerkmale in einer optisch transparenten Schicht des Wertpapiers eingelagert sind, die optisch höherbrechend ist als ihre Umgebung.

10. Wertpapier nach Anspruch 9, dadurch gekennzeichnet, daß die optisch höherbrechende Schicht eine oder mehrere Glasfaser(n), Kunststoffaser(n) oder Kunststofffolie(n) ist (sind).

11. Verfahren zur Echtheitsbestimmung von lumineszierenden Substanzen enthaltenden Wertpapieren nach einem der vorhergehenden Ansprüche durch Anregung mit elektromagnetischer Strahlung und Beobachtung der Anregungs- und/oder Emissionscharakteristiken, dadurch gekennzeichnet, daß die Anregung der lumineszierenden Substanzen spektral in der Nähe der Emission erfolgt, die ausgewertet wird.

12. Verfahren nach Anspruch 11, dadurch gekennzeichnet, daß die Anregungsstrahlung derart in die optisch höherbrechende Schicht des Wertpapiers eingeleitet wird, daß in dieser die Anregungsstrahlung total reflektiert wird und daß die aus der totalreflektierenden Oberfläche austretende Emissionsstrahlung beobachtet wird.

13. Verfahren nach Anspruch 11, dadurch gekennzeichnet, daß im spektralen Bereich oder eng benachbarten Bereich der Anregung das Abklingverhalten der Emissionsstrahlung beobachtet wird.

14. Vorrichtung zur Prüfung von Wertpapieren mit Echtheitsmerkmalen in Form lumineszierender Substanzen, mit einer in einem Gehäuse angeordneten Lichtquelle und einer oder mehreren von der Lichtquelle abgeschirmt angeordneten Photodetektoren, sowie mit einem Transportmechanismus, der das Wertpapier innerhalb der Ablingzeit des lumineszierenden Materials aus dem Bereich der Lichtquelle herausbewegt und den Merkmalsbereich des Wertpapiers mit der oder den Photodetektoren zur Deckung bringt, dadurch gekennzeichnet, daß die Transportvorrichtung eine elektromagnetisch betätigte Klaue (28) aufweist, die das Wertpapier (20) ergreift und nach der Belichtung aus dem Bereich der Lichtquelle (24) heraus unter die Photodetektoren (26) transportiert.

15. Vorrichtung nach Anspruch 14, dadurch gekennzeichnet, daß die Lichtquelle (24) und die Transportvorrichtung von einem durch die Vorderkante des Wertpapiers (20) betätigten Positionierschalter angesteuert werden.

16. Vorrichtung nach Anspruch 14 oder 15, dadurch gekennzeichnet, daß mehrere Photodetektoren in Transportrichtung hintereinander angeordnet sind.

17. Vorrichtung nach einem der Ansprüche 14 bis 16, dadurch gekennzeichnet, daß die Transportvorrichtung das Wertpapier kontinuierlich mit konstanter definierter Geschwindigkeit an der geschwindigkeitssynchron angesteuerten Lichtquelle und der oder den Photodetektoren vorbeiführt.

## Claims

1. A security paper having authenticity features which luminesce in a narrow wavelength range of maximally approximately 100 nm, characterized in that at least part of the luminescent features are excitable exclusively in this narrow wavelength range and also emit in this same wavelength range.

2. A security paper as in claim 1, characterized in that the security paper contains in addition to the luminescent substances, masking substances which absorb at least in al those wavelength ranges in which the luminescent substances are either excitable or emit outside the stated narrow wavelength range.

3. A security paper as in claim 2, characterized in that the masking substances are dyestuffs, coloring pigments and IR or UV absorbers or mixtures thereof.

4. A security paper as in claim 2 or 3, characterized in that the luminescent substances are mixed with the masking substances.

5. A security paper as in claim 2 or 3, characterized in that the luminescent substances are coated with the masking substances.

6. A security paper as in claim 2 or 3, characterized in that the luminescent substances are printed over by the masking substances.

7. A security paper as in claim 1, characterized in that the luminescent authenticity features are printed on.

8. A security paper as in claim 1, characterized in that the luminescent authenticity features are added during the preparation of the paper.

9. A security paper as in claim 1 or 3, characterized in that the luminescent authenticity features are embedded in an optically transparent layer of the security paper which is more highly refractive optically than its surroundings.

10. A security paper as in claim 9, characterized in that the optically more highly refractive layer is one or more glass fibers, synthetic fibers or synthetic films.

11. A method for authenticating security papers containing luminescent substances according to any of the above claims, by excitation using electromagnetic radiation and observation of the excitation and/or emission characteristics, characterized in that the excitation of the luminescent substances takes place spectrally in the vicinity of the emission, which is evaluated.

12. A method as in claim 11, characterized in that the excitation radiation is introduced into the optically more highly refractive layer of the security paper in such a way that the excitation radiation is totally reflected in this layer and that the emission radiation emitted by the totally reflecting surface is observed.

13. A method as in claim 11, characterized in that the decay behavior of the emission radiation in the spectral range or closely adjacent range of the excitation is observed.

14. An apparatus for testing security papers having authenticity features in the form of luminescent substances, comprising a light source arranged in a housing and one or more photodetectors arranged so as to be shielded from the light source, and further comprising a transport mechanism which moves the security paper out of the area of the light source within the decay period of the luminescent material and makes the feature area of the security paper coincide with the photodetector(s), characterized in that the transport device has an electromagnetically operated claw (28) which grasps the security paper (20) and transports it after exposure out of the area of the light source (24) under the photodetectors (26).

15. An apparatus as in claim 14, characterized in that the light source (24) and the transport device are controlled by a positioning switch operated by the leading edge of the security paper (20).

16. An apparatus as in claim 14 or 15, characterized in that several photodetectors are arranged one behind the other in the direction of transport.

17. An apparatus as in any of claims 14 to 16, characterized in that the transport device moves the security paper continuously, at a constant, predefined speed, past the light source, which is controlled in speed synchronism, and the photodetector(s).

**Revendications**

1. Papier-valeur possédant des caractéristiques luminescentes d'authenticité dans une plage étroite de longueurs d'ondes d'environ 100 nm au maximum, caractérisé en ce qu'au moins une partie des caractéristiques luminescentes peut être exclusivement activée dans cette plage étroite de longueurs d'ondes et émet également dans cette même plage de longueurs d'ondes.

2. Papier-valeur selon la revendication 1, caractérisé en ce qu'il contient, en plus des substances luminescentes, des substances de masquage qui sont absorbantes au moins dans toutes les plages de longueurs d'ondes dans lesquelles les substances luminescentes peuvent, en dehors de la plage étroite de longueurs d'ondes précitée, soit être activées, soit émettre.

3. Papier-valeur selon la revendication 2, caractérisé en ce que les substances de masquage sont des colorants, des pigments colorés, et des substances absorbant le rayonnement infrarouge ou le rayonnement ultraviolet ou leurs mélanges.

4. Papier-valeur selon la revendication 2 ou 3, caractérisé en ce que les substances luminescentes sont mélangées aux substances de masquage.

5. Papier-valeur selon la revendication 2 ou 3, caractérisé en ce que les substances luminescentes sont entourées par les substances de masquage.

6. Papier-valeur selon la revendication 2 ou 3, caractérisé en ce que les substances luminescentes sont surimprimées avec les substances de masquage.

7. Papier-valeur selon la revendication 1, caractérisé en ce que les caractéristiques luminescentes d'authenticité sont imprimées.

8. Papier-valeur selon la revendication 1, caractérisé en ce que les caractéristiques luminescentes d'authenticité sont ajoutées lors de la préparation du papier.

9. Papier-valeur selon la revendication 1 ou 3, caractérisé en ce que les caractéristiques luminescentes d'authenticité sont incorporées à une couche optiquement transparente du papier-valeur, qui est optiquement plus réfractive que son environnement.

10. Papier-valeur selon la revendication 9, caractérisé en ce que la couche optiquement plus réfractive est constituée par une ou plusieurs fibre de verre, une ou plusieurs fibre de matière plastique ou une ou plusieurs feuille de matière plastique.

11. Procédé pour déterminer l'authenticité de papiers-valeurs contenant des substances luminescentes selon une des revendications précédentes par activation avec un rayonnement électromagnétique et observation des caractéristiques d'activation et/ou d'émission, caractérisé en ce que l'activation des substances luminescentes est effectuée spectralement au voisinage de l'émission qui est analysée.

12. Procédé selon la revendication 11, caractérisé en ce que le rayonnement d'activation est introduit dans la couche optiquement plus réfractive du papier-valeur de manière que, dans celleci, le rayonnement d'activation soit totalement réfléchi et que le rayonnement d'émission sortant de la surface totalement réfléchissante soit observé.

13. Procédé selon la revendication 11, caractérisé en ce que le comportement d'atténuation du rayonnement d'émission est observé dans un domaine spectral ou dans un domaine étroitement adjacent de l'activation.

14. Dispositif de contrôle de papiers-valeurs ayant des caractéristiques d'authenticité sous la forme de substances luminescentes, comportant une source lumineuse disposée dans un carter et un ou plusieurs photodétecteurs disposés en étant protégés de la source lumineuse, ainsi qu'un mécanisme de transport qui déplace le papier-valeur pendant la période d'atténuation de la matière luminescente pour la faire sortir de la zone de la source lumineuse et qui amène la zone caractéristique du papier-valeur en coïncidence avec le ou les photodétecteurs, caractérisé en ce que le dispositif de transport comporte une pince (28) actionnée électromagnétiquement, qui saisit le papier-valeur (20) et qui, après l'exposition, le transporte à partir de la zone de la source lumineuse (24) en-dessous des photodétecteurs (26).

15. Dispositif selon la revendication 14, caractérisé en ce que la source lumineuse (24) et le dispositif de transport sont commandés par un contacteur de positionnement actionné par le bord avant du papier-valeur (20).

16. Dispositif selon la revendication 14 ou 15, caractérisé en ce que plusieurs photo-détecteurs sont disposés l'un après l'autre dans la direction de transport.

17. Dispositif selon une des revendications 14 à 16, caractérisé en ce que le dispositif de transport fait passer le papier-valeur de façon continue et à une vitesse constante définie devant la source lumineuse activée en synchronisme avec la vitesse, et le ou les photodétecteurs.

FIG.1

FIG.2

0 053 148